# EUROPÄISCHE PATENTSCHRIFT

(11) **EP 1 017 479 B1**
(45) Veröffentlichungstag und Bekanntmachung des Hinweises auf die Patenterteilung: **03.12.2003**
(21) Anmeldenummer: 98952543.1
(22) Anmeldetag: 03.09.1998
(51) Int. Cl.: B01D 53/94, F01N 3/20

(54) **KATALYSATOR UND ABGASLEITUNG ZUR REINIGUNG EINES ABGASES AUS EINEM MIT LUFTÜBERSCHUSS BETRIEBENEN VERBRENNUNGSMOTOR**
CATALYTIC CONVERTER AND EXHAUST LINE FOR CLEANING EXHAUST EMITTED FROM A LEAN MIXTURE OPERATED COMBUSTION ENGINE
CATALYSEUR ET LIGNE DE GAZ D'ECHAPPEMENT POUR L'EPURATION DE GAZ D'ECHAPPEMENT PROVENANT D'UN MOTEUR A COMBUSTION INTERNE FONCTIONNANT AVEC EXCES D'AIR

(30) Priorität: 04.09.1997 DE 19738737
(43) Veröffentlichungstag der Anmeldung: 12.07.2000
(73) Patentinhaber: SIEMENS AKTIENGESELLSCHAFT, 80333 München (DE)
(72) Erfinder: NEUFERT, Ronald, D-96247 Michelau (DE); WITZEL, Frank, D-96215 Lichtenfels (DE); FISCHER, Stefan, D-96215 Lichtenfels (DE)
(74) Vertreter: Tergau & Pohl Patentanwälte
(86) Internationale Anmeldenummer: DE9802603
(87) Internationale Veröffentlichungsnummer: WO99011359

(56) Entgegenhaltungen:
- EP-A- 0 585 795
- EP-A- 0 615 777
- EP-A- 0 628 706
- DE-A- 4 417 238

## Beschreibung

Die Erfindung betrifft einen Katalysator und eine Abgasleitung zur katalytischen Entfernung von Stickoxiden aus einem Abgas eines mit Luftüberschuß betriebenen Verbrennungsmotors, beispielsweise eines Dieselmotors oder eines Magermix-Benzinmotors.

Bei dem Betrieb eines Verbrennungsmotors können in nicht unerheblichem Umfang die genannten Stickoxide entstehen, welche über das Abgas an die Umwelt abgegeben werden und dort Schäden anrichten können. Auch ein Verbrennungsmotor, der mit Luftüberschuß arbeitet, beispielsweise ein Dieselmotor oder ein Magermix-Benzinmotor, gibt bei der Verbrennung eines Treibstoffes Stickoxide an die Umwelt ab.

Zur Verringerung von Stickoxiden im Abgas eines derartigen Verbrennungsmotors ist die Verwendung eines sogenannten DeNOx-Katalysators bekannt, welcher nach dem Verfahren der selektiven katalytischen Reduktion (SCR) die Stickoxide mit einem geeigneten Reduktionsmittel, meist Ammoniak, zu umweltfreundlichem Stickstoff und Wasser umsetzt.

In der EP-A-0 628 706 ist die katalytische Reduktion von Stickoxiden mittels dem SCR-Verfahren beschrieben. Der katalytische Konverter zur Abgasbehandlung weist hierbei einen Reaktor und ein in dem Reaktor angeordnetes Metallschaum-Substrat auf, wobei dieses Substrat durch ein mit Nickel beschichteter Polymerschaum gebildet ist. Das Substrat ist mit einem Metall als katalytisch aktives Material, z.B. Silber, versehen. Weiterhin weist der Konverter eine Zufuhreinrichtung zur Zufuhr eines Reduktionsmittels in das Abgas auf. Als Reduktionsmittel kommt eine Substanz aus der Gruppe'umfassend Kohlenmonoxid, Harnstoff, Ammoniak und Kohlenwasserstoff zum Einsatz. Die Prozesstemperatur für die Reaktion ist zwischen 200 ° C und 600 °C.

Die EP-A-0 313 755 betrifft ein Verfahren zur Herstellung eines gegen Arsenvergiftung resistenten Katalysators zur Entfernung von Stickoxiden aus Abgasen. Beim Einsatz der Katalysatoren kommt das SCR-Verfahren unter Verwendung von Ammoniak als Reduktionsmittel zur Anwendung, Durch eine zusätzliche Impregnierung der Katalysatoren auf Basis von Titandioxid mit einer gelösten Molybdän und/oder Wolframverbindung und ggf. Vanadiumverbindung nach Formung und Calcinierung wird eine Resistenz gegen Arsenvergiftung eralten, wie sie bei großtechnischen Feuerungsanlagen erforderlich ist.

In der US-A-4,085,193 sind Katalysatoren unterschiedlicher Zusammensetzungen auf der Basis von Titan ein Bestandteil und ein weiterer Bestandteil offenbart. Der weitere Bestandteil ist wenigstens ein Metall aus der Gruppe umfassend Molybdän, Wolfram, Eisen, Vanadium, Nickel, Kobalt, Kupfer, Chrom und Uran. Die Bestandteile liegen in Form ihrer Oxide vor. Die Katalysatoren sind für die selektive katalytische Reduktion von Stickoxiden zu molekularem Stickstoff unter Zufuhr eines Reduktionsmittels wie z.B. Wasserstoff, Kohlenwasserstoffe, Kohlenmonoxid und Ammoniak vorgesehen.

In der EP 0 487 866 B1 und der DE 43 08 542 A1 sind SCR-Verfahren zur Stickoxidminderung angegeben, bei denen ein stickstoffhaltiges Reduktionsmittel einem Abgasstrom zudosiert wird, der zuerst einen Hydrolyse-Katalysator passiert, in dem das Reduktionsmittel in Ammoniak umgewandelt wird, bevor der Abgasstrom einen Katalysator zur Stickoxidminderung nach dem SCR-Verfahren durchströmt. Dabei wird beschrieben, den Hydrolyse-Katalysator als eine kombinierte Verdampfer-/Katalysator-Kombination auszuführen, die Durchbrüche, Schlitze oder Umlenkungen zur innigen Vermischung und Aufheizung des im Abgasstrom enthaltenen Reduktionsmittels besitzt, um eine hohe Umwandlungsrate des Reduktionsmittels in Ammoniak zu erreichen.

Die genannten Verfahren zur Stickoxidminderung besitzen den Nachteil, daß der Hydrolyse-Katalysator ein mit Durchbrüchen, Schlitzen oder Umlenkungen versehener Formkörper ist, dessen Herstellungskosten aufgrund der besonderen Formgebung sehr hoch sind. Desweiteren bewirkt der so gestaltete Formkörper des Hydrolyse-Katalysators einen hohen Druckverlust im Abgasweg, was zu einer Minderung der Motorleistung und damit zu einem Anstieg des Kraftstoffverbrauchs führt. Das beschriebene Katalysatorsystem, bestehend aus dem Hydrolyse- und dem DeNOx-Katalysator, beansprucht zudem erheblichen Bauraum, was besonders bei nichtstationären Anwendungen, z.B. im Automobilbau, von großem Nachteil ist.

Die Erfindung hat sich die Aufgabe gestellt, eine Abgasleitung zur Verringerung der im Abgas eines mit Luftüberschuß betriebenen Verbrennungsmotors enthaltenen Stickoxide mit einem vielseitig verwendbaren Katalysator anzugeben, womit sich ein geringer Druckverlust erzielen läßt, wodurch ein kleiner Bauraum beansprucht wird und niedrige Herstellungskosten erreicht werden.

Diese Aufgabe wird erfindungsgemäß gelöst durch eine Abgasleitung zur Verhinderung der im Abgas eines mit Luftüberschuß betriebenen Verbrennungsmotors enthaltenen Stickoxide, mit einer Zuführungsvorrichtung von Reduktionsmittel, das katalytisch unter Bildung von Ammoniak zuersetzbar ist, und einer nachgeschalteten katalytischen Vorrichtung, wobei die katalytische Vorrichtung einen einstückigen Katalysator mit einem katalytisch aktiven Material umfaßt, welches sowohl eine Hydrolyse-Aktivität zur Umwandlung eines Reduktionsmittels zu Ammoniak, als auch eine SCR-Aktivität zum Abbau von Stickoxiden nach dem SCR-Verfahren besitzt.

Beim Durchströmen des einstückigen Katalysators wird das Reduktionsmittel dabei von dem eine Hydrolyse-Aktivität aufweisenden, katalytisch aktiven Material zu Ammoniak umgewandelt.

Gleichzeitig werden über die SCR-Aktivität die im Abgasstrom enthaltenen Stickoxide mit Hilfe des entstandenen Ammoniaks zu unbedenklichem Stickstoff und Wasser umgesetzt. Auf einen separaten Hydrolyse-Katalysator kann vollständig verzichtet werden. Durch die Zusammenfassung des Hydrolyse- und des SCR-Katalysators zu einem einzigen Bauteil kann der insbesondere bei einem instationären Verbrennungsmotor zur Traktion eines LKW oder eines PKW sehr begrenzte Bauraum effektiv ausgenutzt werden. Der Druckverlust wird gegenüber einem herkömmlichen System deutlich verringert.

Das katalytisch aktive Material für die simultane Hydrolyse des stickstoffhaltigen Reduktionsmittels zu Ammoniak und Stickoxidminderung nach dem SCR-Verfahren umfaßt vorzugsweise 70 - 95 Gew.-% Titandioxid (TiO₂), 2 - 10 Gew.-% Wolframtrioxid (WO₃), 0 - 10 Gew.-% Molybdäntrioxid (MoO₃), 0 - 5 Gew.% Vanadiumpentoxid (V₂O₅), 0.1 - 6 Gew.-% Aluminiumoxid (Al₂O₃) und 0.1 - 6 Gew.-% Siliziumdioxid (SiO₂). Das katalytisch aktive Material wird durch Mischen, Vermahlen und Verkneten der Oxide oder ihrer Vorläuferverbindungen, gegebenenfalls unter Zusatz von üblichen keramischen Hilfs- und Füllstoffen, hergestellt. Anschließend wird das katalytisch aktive Material gegebenenfalls bei 20 - 100 °C getrocknet und abschließend bei 200 - 800 °C calciniert.

In vorteilhafter Ausgestaltung der Erfindung weist der Katalysator eine BET-Oberfläche von 30 - 150 m²/g und ein Porenvolumen, gemessen nach dem Quecksilber-Eindringverfahren, von 100 - 1000 ml/g mit mono- oder polymodaler Porenradienverteilung auf. Dabei wird beim Quecksilber-Eindringverfahren die Menge des die Poren erfüllenden Quecksilbers gemessen.

Der Katalysator besteht vorteilhaft aus einem metallischen oder keramischen Träger, der mit dem katalytisch aktiven Material beschichtet ist. Ebenso kann der Katalysatorkörper in seiner Gesamtheit aus katalytisch aktivem Material bestehen und als Voll-extrudat hergestellt sein.

Die zweitgenannte Aufgabe wird durch eine Abgasleitung mit einer Zuführungsvorrichtung für Reduktionsmittel, welches katalytisch unter Bildung von Ammoniak zersetzbar ist, und einer nachgeschalteten katalytischen Vorrichtung zur Verminderung der im Abgas enthaltenen Stickoxide erfindungsgemäß dadurch gelöst, daß die katalytische Vorrichtung einen SCR-Katalysator umfaßt, welcher zugleich für die Hydrolyse des stickstoffhaltigen Reduktionsmittels aktiv ist.

Für die Zuführung des Reduktionsmittels, insbesondere in flüssiger Form, kann z.B. eine entsprechend ausgelegte steuer- oder regelbare Düse vorgesehen sein.

Zur Verbesserung der Hydrolyse-Aktivität des Katalysators, insbesondere bei niedrigen Abgastemperaturen, ist dem einstückigen Katalysator vorteilhaft eine Heizeinrichtung, z.B. in Form einer elektrischen Heizeinrichtung oder eines Blaubrenners, zugeordnet. Insbesondere bei einem "Kaltstart" eines Verbrennungsmotors kann dadurch der Katalysator schnell auf eine günstige Betriebstemperatur erhitzt werden. Auf diese Weise kann ein unnötig erhöhter Schadstoffausstoß bei kalten Abgastemperaturen vermieden werden.

Von Vorteil ist es dabei, wenn die Heizeinrichtung eine elektrische Heizeinrichtung ist. Dadurch kann die eingebrachte Heizleistung der jeweils vorherrschenden Temperatur des Abgases leicht durch eine Strom- oder Spannungsänderung angepaßt werden. Die elektrische Heizeinrichtung kann dabei indirekt an oder neben dem einstückigen Katalysator in Form einer Heizwendel oder in Form einer die umgebende Abgasführung umspannende Heizspule oder auch direkt durch Einschalten des einstückigen Katalysators als Heizwiderstand in einem elektrischen Stromkreis ausgeführt sein.

Es können auch mehrere, einstückige Katalysatoren mit gleichzeitiger Hydrolyse- und SCR-Aktivität hintereinander geschaltet werden. Durch die dadurch erzielte verbesserte Durchmischung des Abgases läßt sich auch bei stark schwankendem Stickoxidgehalt im Abgas erreichen, daß kein nennenswerter Schlupf des Reduktionsmittels auftritt.

Durch den Wegfall des bislang notwendigen, separaten Hydrolyse-Katalysators verringert sich der Druckverlust in der Abgasleitung und damit auch der Kraftstoffmehrverbrauch.

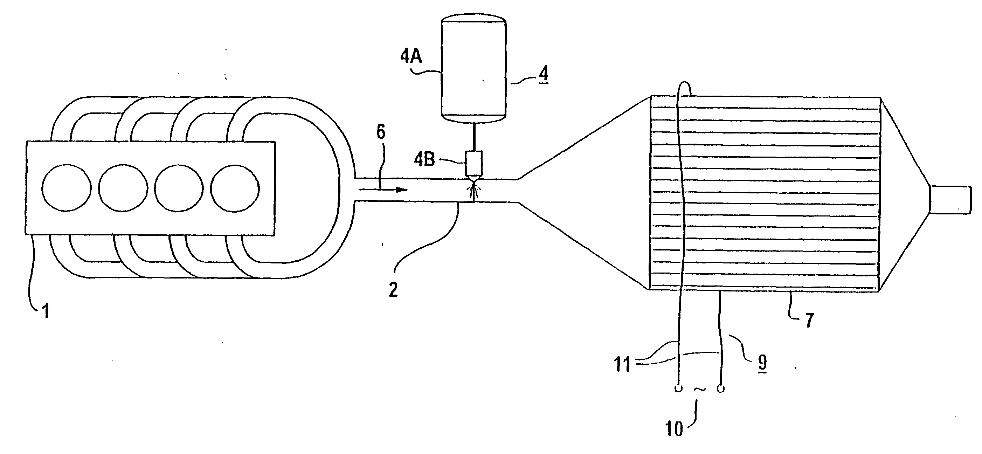

Nachfolgend wird ein Ausführungsbeispiel der Erfindung anhand einer Figur näher erläutert. Die Figur zeigt hierzu schematisch einen Dieselmotor mit einer Abgasleitung mit darin integriertem Katalysator.

In der Figur ist als ein mit Luftüberschuß arbeitender Verbrennungsmotor 1 ein Dieselmotor gezeigt, welcher über eine Abgasleitung 2 mit einem plattenförmigen, einstückigen Katalysator 7 verbunden ist, welcher gleichzeitig eine Hydrolyse-Aktivität und eine SCR-Aktivität besitzt.

Der Katalysator 7 ist als beschichteter Plattenkatalysator ausgeführt und umfaßt als katalytisch aktive Substanzen [80 Gew.-% TiO₂, 5 Gew.-% WO₃, 5 Gew.-% MoO₃, 3 Gew.-% V₂O₅, 3,5 Gew.-% Al₂O₃ und 3,5 Gew.-% SiO₂]. Die spezifische Oberfläche beträgt 120 m²/g; der Porenradius der katalytischen Masse beträgt 620 ml/g.

Dem einstückigen Katalysator 7 ist weiterhin eine elektrische Heizeinrichtung 9 zugeordnet. Dabei ist der Katalysator 7 an eine Spannungsquelle 10 mittels der Anschlußdrähte 11 angeschlossen. Die Anschlußdrähte 11 sind dabei jeweils mit dem metallischen Träger des einstückigen Katalysators 7 kontaktiert. Die Spannungsquelle 10 ist als eine steuerbare Wechselspannungsquelle ausgeführt.

Der Abgasleitung 2 ist eine Zuführungsvorrichtung 4 für Reduktionsmittel zugeordnet, die sich in Strömungsrichtung 6 des Abgases vor dem Katalysator 7 befindet und die dem vom Dieselmotor 1 erzeugten Abgasstrom eine wäßrige Harnstofflösung zumischt. Die Zuführungsvorrichtung 4 umfaßt einen Harnstofftank 4A, der an eine steuerbare Düse 4B angeschlossen ist, die in die Abgasleitung 2 mündet.

## Patentansprüche

1. Abgasleitung (2) zur Verminderung der im Abgas eines mit Luftüberschuß betriebenen Verbrennungsmotors (1) enthaltenen Stickoxide, mit einer Zuführungsvorrichtung (4) von Reduktionsmittel, das katalytisch unter Bildung von Ammoniak zersetzbar ist, und einer nachgeschalteten katalytischen Vorrichtung, **dadurch gekennzeichnet, daß** die katalytische Vorrichtung einen einstückigen Katalysator (7) mit einem katalytisch aktiven Material, welches sowohl eine Hydrolyse-Aktivität zur Umwandlung eines Reduktionsmittels zu Ammoniak, als auch eine SCR-Aktivität zum Abbau von Stickoxiden nach dem SCR-Verfahren besitzt, wobei das katalytisch aktive Material 70 - 95 Gew.-% TiO₂, 2 - 10 Gew.-% WO₃, 0 - 10 Gew.-% MoO₃, 0 - 5 Gew.-% V₂O₅, 0.1 - 6 Gew.-% Al₂O₃ und 0.1 - 6 Gew.-% SiO₂ enthält.

2. Abgasleitung (2) nach Anspruch 1,
**gekennzeichnet durch** eine katalytisch aktive Oberfläche von 30 - 150 m²/g und einen Porenradius gemäß dem Quecksilber-Eindringverfahren von 100 - 1000 ml/g.

3. Abgasleitung (2) nach einem der Ansprüche 1 bis 2,
**dadurch gekennzeichnet, daß** eine Schicht aus katalytisch aktivem Material auf einem keramischen oder metallischen Träger aufgebracht ist.

4. Abgasleitung (2) nach einem der Ansprüche 1 bis 3, mit einem als Plattenkatalysator ausgeführten Katalysator (7).

5. Abgasleitung (2) nach einem der Ansprüche 1 bis 3, mit einem als Wabenkatalysator ausgeführten Katalysator (7).

6. Abgasleitung (2) nach einem der Ansprüche 1 bis 2, mit einem als vollextrudierten Katalysatorkörper ausgeführten Katalysatorkörper.

7. Abgasleitung (2) nach Anspruch 1-6,
**gekennzeichnet durch** eine Heizeinrichtung für den Katalysator (7).

## Claims

1. Exhaust line (2) for reducing the nitrogen oxides contained in the exhaust of a combustion engine (1) operated with excess air, having a feeding device (4) for reducing agent, which can be catalytically broken down with the formation of ammonia, and having a downstream catalytic device, **characterized in that** the catalytic device contains a one-piece catalytic converter (7) with a catalytically active material which has both a hydrolysis activity for the conversion of a reducing agent into ammonia, and an SCR activity for the breaking down of nitrogen oxides by the SCR process, the catalytically active material containing 70 - 95% by weight of TiO₂, 2 - 10% by weight of WO₃, 0 - 10% by weight of MoO₃, 0 - 5% by weight of V₂O₅, 0.1 - 6% by weight of Al₂O₃ and 0.1 - 6% by weight of SiO₂.

2. Exhaust line (2) according to Claim 1, **characterized by** a catalytically active surface of 30 - 150 m²/g and a pore radius according to the mercury penetration method of 100 - 1000 ml/g.

3. Exhaust line (2) according to one of Claims 1 and 2, **characterized in that** a layer of catalytically active material is applied to a ceramic or metallic support.

4. Exhaust line (2) according to one of Claims 1 to 3, with a catalytic converter (7) designed as a plate catalyst.

5. Exhaust line (2) according to one of Claims 1 to 3, with a catalytic converter (7) designed as a honeycomb catalyst.

6. Exhaust line (2) according to one of Claims 1 and 2, with a catalyst body designed as a fully extruded catalyst body.

7. Exhaust line (2) according to Claims 1 to 6, **characterized by** a heating device for the catalytic converter (7).

## Revendications

1. Conduite à gaz d'échappement (2) pour réduire les oxydes d'azote contenus dans les gaz d'échappement d'un moteur à combustion interne (1) fonctionnant avec un excès d'air, comportant un dispositif d'amenée (4) d'agent réducteur qui est dégradable par voie catalytique en formant de l'ammoniac, et comportant un dispositif catalytique agencé en aval, **caractérisé en ce que** le dispositif catalytique possède un catalyseur (7) réalisé d'un seul tenant et comportant un matériau actif sur le plan catalytique qui présente aussi bien une activité d'hydrolyse pour transformer un agent réducteur en ammoniac, qu'une activité de réduction catalytique sélective (SCR) pour supprimer des oxydes d'azote selon le procédé SCR, le matériau actif sur le plan catalytique comprenant de 70 à 95 % en poids de TiO₂, de 2 à 10 % en poids de WO₃, de 0 à 10 % en poids de MoO₃, de 0 à 5 % en poids de V₂O₅, de 0,1 à 6 % en poids de Al₂O₃ et de 0,1 à 6 % en poids de SiO₂.

2. Conduite à gaz d'échappement (2) selon la revendication 1, **caractérisée par** une surface active sur le plan catalytique de 30 à 150 m²/g et par un rayon de pore selon le procédé de ressuage de mercure de 100 à 1000 ml/g.

3. Conduite à gaz d'échappement (2) selon l'une des revendications 1 et 2, **caractérisée en ce qu'**une couche de matériau actif sur le plan catalytique est déposée sur un support céramique ou métallique.

4. Conduite à gaz d'échappement (2) selon l'une des revendications 1 à 3, comportant un catalyseur (7) réalisé sous forme de catalyseur en plaque.

5. Conduite à gaz d'échappement (2) selon l'une des revendications 1 à 3, comportant un catalyseur (7) réalisé sous forme de catalyseur en nids d'abeilles.

6. Conduite à gaz d'échappement (2) selon l'une des revendications 1 et 2, comportant un corps de catalyseur réalisé sous forme de corps de catalyseur entièrement extrudé.

7. Conduite à gaz d'échappement (2) selon l'une des revendications 1 à 6, **caractérisée par** un dispositif de chauffage pour le catalyseur (7).
